**Europäisches Patentamt**

(19) **European Patent Office**

**Office européen des brevets**

(11) Veröffentlichungsnummer: **0 064 213**
**B1**

(12) **EUROPÄISCHE PATENTSCHRIFT**

(45) Veröffentlichungstag der Patentschrift:
**27.08.86**

(51) Int. Cl.⁴: **H 01 M 10/39**

(21) Anmeldenummer: **82103299.2**

(22) Anmeldetag: **20.04.82**

(54) **Elektrochemische Speicherzelle beziehungsweise -batterie.**

(30) Priorität: **02.05.81 DE 3117381**

(43) Veröffentlichungstag der Anmeldung:
**10.11.82 Patentblatt 82/45**

(45) Bekanntmachung des Hinweises auf die Patenterteilung:
**27.08.86 Patentblatt 86/35**

(84) Benannte Vertragsstaaten:
**BE FR GB IT NL**

(56) Entgegenhaltungen:
**DE - A - 2 457 418**
**DE - A - 2 751 947**
**DE - A - 2 814 905**
**DE - A - 2 906 802**
**DE - B - 2 720 726**
**US - A - 3 749 603**

**PATENT ABSTRACTS OF JAPAN, unexamined application, Section C, Band 5, Nr. 41, 18. März 1981 THE PATENT OFFICE JAPANESE GOVERNMENT Seite 72 C 47**

(73) Patentinhaber: **BROWN, BOVERI & CIE Aktiengesellschaft, Kallstadter Strasse 1, D-6800 Mannheim 31 (DE)**

(72) Erfinder: **Mennicke, Stefan, Dr., Türkisweg 27, D-6906 Leimengau (DE)**
Erfinder: **Reiss, Karl, Panoramastrasse 6, D-6909 Mühlhausen-Rettigheim (DE)**
Erfinder: **Liebermann, Kurt, Nahestrasse 8, D-6800 Mannheim 1 (DE)**

(74) Vertreter: **Kempe, Wolfgang, Dr. et al, c/o Brown, Boveri & Cie AG Postfach 351, D-6800 Mannheim 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung bezieht sich auf eine elektrochemische Speicherzelle oder -batterie gemäss dem Oberbegriff des Patentanspruchs 1.

Speicherzellen der oben genannten Bauart bieten eine erhebliche konstruktive Vereinfachung durch die Verwendung der Zellwand als Stromkollektor. Ein weiterer Vorteil ergibt sich hier durch die Verwendung von Leichtmetall für die Zellwände, was den Speicherzellen beziehungsweise -batterien eine hohe Leistungsdichte verleiht.

Für die Herstellung der Zellgehäuse wird vorzugsweise Aluminium verwendet. Ein wesentlicher Nachteil hierbei ist jedoch, dass sich auf dem Zellwandmaterial, insbesondere durch den Schwefel beziehungsweise die Natriumpolysulfidschmelze, eine nicht leitende Sulfidschicht bildet.

Zur Überwindung dieses Problems ist in der DE-OS 2 457 418 vorgeschlagen worden, der Zellwand eine Abschirmelektrode aus einem korrosionsbeständigen Material, insbesondere Graphit, vorzuschalten.

Aus der US-PS 3 749 603 ist bekannt, Folien, die aus Leichtmetall gefertigt sind, und im Kathodenraum angeordnet werden, durch einen Überzug aus MoS2 vor Korrosion zu schützen. Es wurde weiterhin der Versuch unternommen, die Leichtmetallzellwände mit Kobalt- oder Chromsulfiden zu beschichten. Die vorgenannten Möglichkeiten können zwar das Korrosionsverhalten kurzzeitig verbessern, langfristig treten aber neue Nachteile auf. Hier ist insbesondere das Ansteigen des Innenwiderstands der Speicherzelle durch die Bildung einer Sulfidschicht auf der Zellwand zu nennen. Solche reinen Sulfidschichten sind elektrisch nicht leitend und bewirken dadurch das Ansteigen des Innenwiderstandes der Zelle.

Aus der DE-AS 2 720 726 ist eine elektrochemische Speicherzelle mit einem metallischen Gehäuse aus Leichtmetall bekannt. Um dieses vor den korrosiven Einflüssen der Reaktanden bzw. der Reaktionsprodukte zu schützen, sind seine Innenflächen mit einer Legierung bestehend aus Nickel und/oder Kobalt, die einen Zusatz an Chrom enthalten, beschichtet.

In der DE-OS 2 814 905 ist eine elektrochemische Speicherzelle mit einem Leichtmetallgehäuse beschrieben, auf dessen Innenflächen zum Schutz gegen Korrosion eine Folie aus Graphit, Titan, einer Titanlegierung, Zirkon, einer Zirkonlegierung oder Molybdän aufgeklebt ist.

Aus der DE-OS 2 751 947 ist eine elektrochemische Speicherzelle bekannt, die einen Stromkollektor aufweist, dessen Kern aus Aluminium gefertigt ist. Auf die Aussenfläche dieses Stromkollektors ist zunächst eine als Zwischenschicht dienende Nickel/Chrom-Legierung aufgetragen, die einen Titanoxidüberzug aufweist.

Alle oben beschriebenen Massnahmen zur Beseitigung von korrosiven Einflüssen auf aluminiumhaltigen Bauteilen von elektrochemischen Speicherzellen zeigen nur kurzzeitige Wirkungen, so dass insbesondere bei einem Langzeitbetrieb der Speicherzellen auch hierbei die Bildung von reinen nichtleitenden Sulfidschichten nicht ausgeschlossen werden.

Der Erfindung liegt deshalb die Aufgabe zugrunde, eine elektrochemische Speicherzelle mit einem Leichtmetallgehäuse zu schaffen dessen Oberfläche mit geringem Material- und Zeitaufwand chemisch so veränderbar ist, dass sich bei Betriebsbedingungen der Speicherzelle auf der Metallgehäusewand eine leitfähige Schicht bildet.

Diese Aufgabe wird erfindungsgemäss durch die kennzeichnenden Merkmale des Patentanspruches 1 gelöst.

Der aufgetragene Metallüberzug hat eine Dicke, die 1 μm nicht überschreitet. Der Weg zur Erzielung der gewünschten Oberflächenmodifizierung ist die Ionenimplantation. So kann zur Beschichtung der Zellwand das plasma-unterstützte CVD-Verfahren eingesetzt werden. Der Metallüberzug lässt sich auch mit Hilfe des PVD-Verfahrens erzielen.

Die Erfindung wird nachfolgend anhand einer Zeichnung näher erläutert.

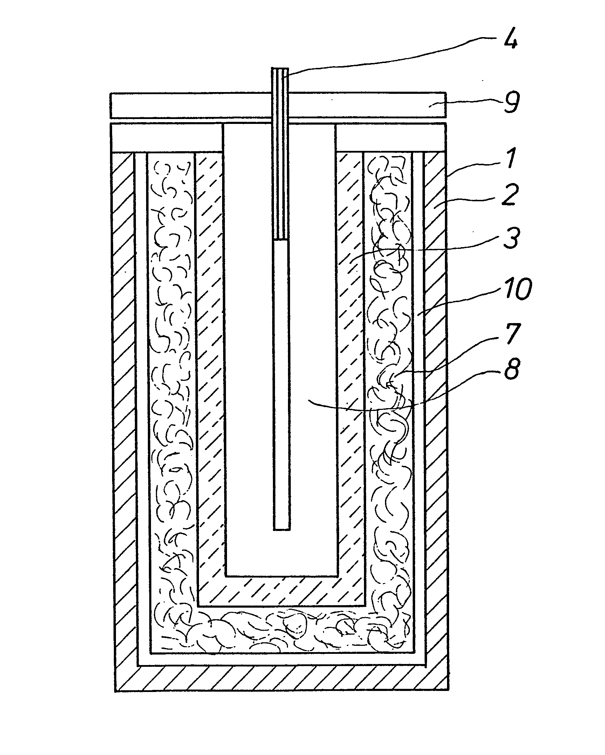

Die Figur zeigt die erfindungsgemässe Speicherzelle 1 mit einem becherförmigen Körper 2 aus Leichtmetall, einem Festelektrolyten 3 und einem Stromabnehmer 4. Bei dem hier beschriebenen Ausführungsbeispiel ist der becherförmige Körper aus Aluminium gefertigt. Im Inneren des becherförmigen Körpers 2 ist der ebenfalls becherförmig ausgebildete Festelektrolyt 3 angeordnet. Hierbei handelt es sich um ein einseitig geschlossenes Rohr aus Beta-Aluminiumoxid. Die Abmessungen des Festelektrolyten 3 sind so gewählt, dass zwischen seinen äusseren Begrenzungsflächen und den inneren Begrenzungsflächen des becherförmigen Körpers 2 ein Mindestabstand von einigen mm besteht, so dass dadurch ein zusammenhängender Zwischenraum 7 gebildet wird. Das Innere des Festelektrolyten 3 dient als Anodenraum 8, in dem das Alkalimetall, insbesondere das Natrium eingefügt ist. Das Innere des Festelektrolyten 3 kann zusätzlich mit einem kapillaraktiven Material, insbesondere einem Metallfilz beziehungsweise einer Metallwolle ausgefüllt sein, die nicht mit dem Alkalimetall getränkt ist. Die Menge des in den Festelektrolyten 3 eingefüllten Natriums wird so gewählt, dass die untere und seitliche Begrenzungsfläche des Festelektrolyten während des gesamten Entladevorgangs der Speicherzelle von dem Natrium benetzt wird. In das Innere des Festelektrolyten 3 ragt der Stromabnehmer 4 hinein. Es handelt sich hierbei um einen Graphitstab, der durch die Deckplatte 9 der Speicherzelle hindurchgeführt ist und diese einige mm überragt. Der zwischen dem Metallgehäuse 2 und dem Festelektrolyten 3 verbleibende Zwischenraum 7 dient bei dem hier beschriebenen Ausführungsbeispiel als Kathodenraum. Das Metallgehäuse 2 dient hierbei als kathodischer Stromabnehmer. Das Innere des Kathodenraumes 7 ist mit einem Graphitfilz ausgefüllt, der mit Schwefel getränkt ist. Die Innenflächen des becherförmigen Körpers 2 sind, soweit sie mit der Katholytsubstanz in Berührung stehen, mit einem Metallüberzug 10 versehen. Es handelt sich hierbei um eine sehr dünne Schicht, deren maximale Dicke 1 µm beträgt. Bei dem hier beschriebenen Ausführungsbeispiel wurde als Metallüberzug 10 Titan auf die Innenflächen des becherförmigen Metallgehäuses 2 aufgetragen. Das Auftragen des Titans erfolgte hierbei in einer Gasentladung, wobei der Gasdruck etwa 0,1 millibar betrug. Die Beschichtung erfolgte während eines Zeitraums von ein bis zwei Minuten. Der becherförmige Körper 2 ist bei dem hier beschriebenen Beispiel aus Aluminium 99,5 hergestellt. Für die Beschichtung wurde er in der Gleichspannungsentladung als Kathode mit einem Potential von −3,0 bis −3,5 kV geschaltet. Die in der oben angegebenen Zeit aufgetragene Titanschicht weist, wie bereits erwähnt, eine Dicke von maximal 1 µm auf. Bei der so ausgebildeten elektrochemischen Speicherzelle bildet sich unter Betriebsbedingungen eine leitende Titansulfidschicht beziehungsweise eine Titan/Aluminium-Mischsulfidschicht. Die Bildung einer Aluminiumsulfidschicht ist bei der hier beschriebenen Speicherzelle fast vollständig ausgeschlossen. Sollte es doch aufgrund der sehr dünn aufgetragenen Titanschicht bereichsweise zur Ausbildung von Aluminiumsulfidschichten kommen, so wird dadurch die Leitfähigkeit des als Stromabnehmer dienenden Metallgehäuses nur gering oder überhaupt nicht beeinflusst. Ein Anstieg des Innenwiderstandes bei der hier beschriebenen Speicherzelle ist auch nach sehr vielen Betriebsstunden nicht festzustellen. Die in Fig. 1 dargestellte und in der dazugehörigen Beschreibung erläuterte Speicherzelle kann auch dann betrieben werden, wenn der Kathodenraum im Inneren des Festelektrolyten und der Anodenraum zwischen dem Metallgehäuse und dem Festelektrolyten angeordnet wird.

## Patentansprüche

1. Elektrochemische Speicherzelle oder -batterie (1) auf der Basis von Alkalimetall und Chalkogen mit mindestens einem für die Aufnahme eines ersten Reaktanden bestimmten Anodenraum (7, 8) und einem für die Aufnahme eines zweiten Reaktanden bestimmten Kathodenraum (7, 8) welche durch eine alkaliionenleitende Festelektrolytwand (3) voneinander getrennt und durch eine mit einer leitfähigen Schutzschicht (10) aus Titan versehenen Zellwand (2) aus Leichtmetall begrenzt sind, dadurch gekennzeichnet, dass auf die Zellwand (2) aus Aluminium zumindest in dem Bereich, der mit wenigstens einem der Reaktanden in Kontakt steht zur Bildung einer metallsulfidhaltigen Schutzschicht (10) ein maximal 1 µm dicker Metallüberzug aus Titan durch Ionenimplantation auf das Leichtmetall der Zellwand (2) aufgebracht ist, und dass das den Metallüberzug bildende Titan als Legierungsbestandteil dem Leichtmetall beigemischt und in Bereichen, die mit einem der beiden Reaktanden in Kontakt stehen durch Abätzen des Leichtmetalls in der Zellwand (2) angereichert ist.
2. Speicherzelle nach Anspruch 1, dadurch gekennzeichnet, dass der Metallüberzug durch ein plasmaunterstütztes CVD-Verfahren hergestellt ist.

3. Speicherzelle nach Anspruch 1, dadurch gekennzeichnet, dass der Metallüberzug durch ein ionenimplantiertes PVD-Verfahren hergestellt ist.

## Claims

1. Electrochemical storage cell or battery (1) based on an alkali metal and a chalcogen, with at least one anode space (7, 8) intended to receive a first reactant, and a cathode space (7, 8), intended to receive a second reactant, which spaces are separated from one another by a solid-electrolyte wall (3) which conducts alkali metal ions, and are bounded by a cell wall (2) of light metal, provided with a conductive protective layer (10) of titanium, characterized in that, on the cell wall (2) of aluminium, at least in the region which is in contact with at least one of the reactants, an at most 1 µm thick metal coating of titanium has been applied by ion implantation to the light metal of the cell wall (2), in order to form a metal sulphide-containing protective layer (10), and that the titanium forming the metal coating is admixed as an alloy constituent to the light metal and is enriched in regions, which are in contact with one of the two reactants, by etching away of the light metal in the cell wall (2).

2. Storage cell according to claim 1, characterized in that the metal coating has been prepared by a plasma-assisted chemical vapour-deposition process.

3. Storage cell according to claim 1, characterized in that the metal coating has been prepared by an ion-implanted plasma vapour-deposition process.

## Revendications

1. Accumulateur ou élément (1) d'accumulateur électrochimique utilisant le couple métal alcalin – chalcogène, avec au moins un compartiment anodique (7, 8) destiné à recevoir un premier réactif et un compartiment cathodique (7, 8) destiné à recevoir un deuxième réactif, qui sont séparés l'un de l'autre par une paroi d'électrolyte solide (3) conduisant les ions alcalins et qui sont délimités par une paroi d'élément (2) en métal léger munie d'une couche de protection (10) conductrice en titane, caractérisé par le fait qu'afin de former une couche protectrice (10) contenant du sulfure métallique, un revêtement métallique en titane d'une épaisseur maximale de 1 micron est, au moins dans la zone qui est en contact avec au moins un des réactifs, appliqué par implantation ionique sur le métal léger de la paroi d'élément (2) en aluminium, et que le titane constituant le revêtement métallique est mélangé comme composant d'alliage au métal léger et, dans les zones qui sont en contact avec un des deux réactifs, la paroi d'élément (2) est enrichie en titane par corrosion du métal léger.

2. Elément d'accumulateur selon la revendication 1, caractérisé par le fait que le revêtement métallique est réalisé par un procédé CVD renforcé par plasma.

3. Elément d'accumulateur selon la revendication 1, caractérisé par le fait que le revêtement métallique est réalisé par un procédé PVD à implantation ionique.